# EUROPEAN PATENT SPECIFICATION

(11) **EP 0 499 371 B1**
(45) Date of publication and mention of the grant of the patent: **08.04.1998**
(21) Application number: 92300641.5
(22) Date of filing: 24.01.1992
(51) Int. Cl.: B32B 17/10, C03B 33/07, B26D 1/46, B26D 7/08, B24B 21/00, B24B 9/10, B24B 55/08

(54) **Manufacture of laminated windows**
Herstellung von Verbundglasscheiben
Fabrication de vitrages laminées

(30) Priority: 26.01.1991 GB 9101762
(43) Date of publication of application: 19.08.1992
(73) Proprietor: PILKINGTON PLC, St. Helens, Merseyside WA10 3TT (GB)
(72) Inventor: Walker, Roderick James, Liverpool L23 2TL (GB); Jago, John James, Liverpool L18 3JX (GB); Twist, Douglas, Hollywood, Birmingham B47 5LU (GB)
(74) Representative: Jenkins, Peter David

(56) References cited:
- EP-A- 0 210 095
- DE-A- 2 656 529
- DE-C- 1 093 656
- FR-A- 2 314 825
- GB-A- 2 144 363
- US-A- 1 910 748
- US-A- 2 621 449

## Description

The present invention relates to a method of producing laminated windows according to the independent method claim. The invention also relates to an apparatus suitable for operation of the method according to the independent apparatus claim.

It is well known to produce laminated windows by the use of at least one ply of a plastic interlayer material, for example, polyvinyl butyral, to bond together at least two plies of more rigid glazing material, for example, glass. The bonding process is normally carried out under conditions of elevated pressure and temperature in an autoclave, during which shrinkage of the interlayer material may occur. It is therefore necessary to cut the interlayer material initially to a shape and size larger than that of the glazing material. After the autoclave process, the surplus interlayer material must be removed.

In the prior art, this removal of surplus interlayer material has been carried out by a process of cutting: at its simplest, by a manual process using some form of sharpened blade. There are three principal aspects in which such a process is deficient. First, it is time-consuming and hence costly in terms of labour. Secondly, the operator must cause the blade to follow the periphery of the glazing material very accurately, for surface damage caused to the glazing material by the blade cannot be tolerated, but neither can the leaving of a remainder of interlayer as a result of the blade not passing sufficiently close to the glazing material. Finally, the blade is rapidly blunted by preferred interlayer materials and the glazing materials. It will be appreciated that a blunted blade renders the achievement of an accurate trim even more difficult, and so frequent interruptions for changes of blade are necessary.

Attempts to improve on these deficiencies have been made: for instance FR 2 510 029 discloses a mechanised system in which a cutting head, possibly containing two blades, is provided with guiding means to follow the periphery of a laminated glazing. The cutting head may be mounted on a carriage, which moves around the glazing, and may be propelled by an electric motor. The cutting performance may be improved by heating the blades by electric resistance elements.

The rapid blunting of individual cutting blades may be reduced by using an endless cutting belt as disclosed in GB 2 144 363A. New problems can occur in that the strip of interlayer material being removed may become entangled in the pulleys on which the belt runs. GB 2144363A teaches a device modified to overcome this problem.

More recently, the advantage of electronically programmable motive members (robots) has allowed further and more accurate automation of the manual cutting process. In EP 210095, electronic programming has been used to control not only the path followed by an endless belt cutting device mounted on a robot, but also provide for automatic replacement and sharpening of the cutting belt. European Patent Publication 370973 also discloses the application of robot technology to the finishing of laminate material. The cutting head contains two blades for closer finishing, and automatic replacement of the blades is provided for. Part of the invention lies in the mounting and manner of movement of the blades. Furthermore, a feedback control system regulates the pushing force of the blades on the edge of the glass.

It will be observed that all the prior art cited shares the feature of a process of cutting, using either discrete or endless blades, for the trimming of laminated material. The inventions described above attempt to alleviate deficiencies in such cutting processes.

US-A-1910748 discloses a machine for and method of processing laminated glass by cutting and edging or beveling the glass with a rotating wheel.

It has now been found, surprisingly, that a process of abrasion satisfactorily removes surplus interlayer material from a laminated window during its manufacture, while avoiding or at least alleviating the disadvantages of the prior art.

The present invention provides a method of producing a laminated window including the step of incorporating an interlayer of a plastics material between two adjacent transparent plies whereby the interlayer is oversize so that the interlayer of plastics material extends beyond the edges of the adjacent plies and the excess of such plastics material extending beyond the adjacent plies is removed by an abrasive belt of an abrading tool, the abrasive belt being rotated across the edge of the window in a direction from one transparent ply to the other transparent ply, the abrasive belt being unsupported in the region thereof which contacts the plastics material to be abraded thereby facilitating the conformation of the belt to the periphery of the window, and the abrasive belt bearing against the peripheral edge of the window under an applied load so as to cause deflection of the belt in the said region.

The abrasion is conveniently carried out using an abrading tool which is moved along the peripheral edge of the window. The abrading tool may be moved by a robot to remove excess plastics material from around the periphery of the window. Preferably, at at least one selected corner of the window the abrading tool is traversed along one edge of the window and past the said corner so as to be out of contact with the window and then the abrading tool is positioned so as to be aligned with the adjacent edge to be traversed.

Preferably, the abrading tool is maintained at a constant working pressure against the window edge.

According to a further aspect of the invention, there is provided apparatus for removing plastics interlayer material from the peripheral edge of a laminated window, the apparatus comprising a mounting means for mounting the window and a tool for removing the plastics material, the tool comprising an abrasive belt and the apparatus further comprising a robot programmed to move the abrading tool and mounting means relative to each other whereby in use the abrasive belt engages excess interlayer material around the peripheral edge of the window, the abrading tool being adapted to rotate the abrasive belt across the edge of the window in a direction from one transparent ply to the other transparent ply, the abrasive belt being unsupported in the region thereof which, in use, contacts the plastics material to be abraded thereby facilitating the conformation of the belt to the periphery of the window and the abrading tool being adapted, in use, to bear the abrasive belt against the peripheral edge of the window under an applied load so as to cause deflection of the belt in the said region.

Preferably, the robot is adapted to move the abrading tool along the peripheral edge of the window.

Preferably at at least one selected corner of the window the robot is adapted to traverse the abrading tool along one edge of the window and past the corner so as to be out of contact with the window and then to position the abrading tool so as to be aligned with the adjacent edge to be traversed.

Preferably the robot is provided with means for maintaining a constant working pressure between the abrading tool and the window edge.

Preferably, the mounting means is adapted to mount to the window in fixed position, with the abrading tool mounted on the robot for movement around the periphery of the window.

The invention is illustrated but not limited by the following description of particular embodiments with reference to the accompanying drawings in which:-
Fig.1 is a side view in perspective of an abrasive tool, incorporating an abrasive belt, in accordance with a first emdbodiment of the present invention, the abrasive tool engaging the edge of a laminated window to be trimmed illustrating the operation of a method in accordance with the invention;
Fig. 2 is a cross-section along lines A-A of the laminated window in Fig. 1;
Fig. 3 is a front view in perspective of the abrasive belt shown in Fig. 1;
Fig. 4 is a perspective view of an apparatus in accordance with the invention incorporating the abrasive tool of Figs. 1 and 3; and
Fig. 5 is a schematic side view of part of an abrasive tool in accordance with a second embodiment of the present invention.

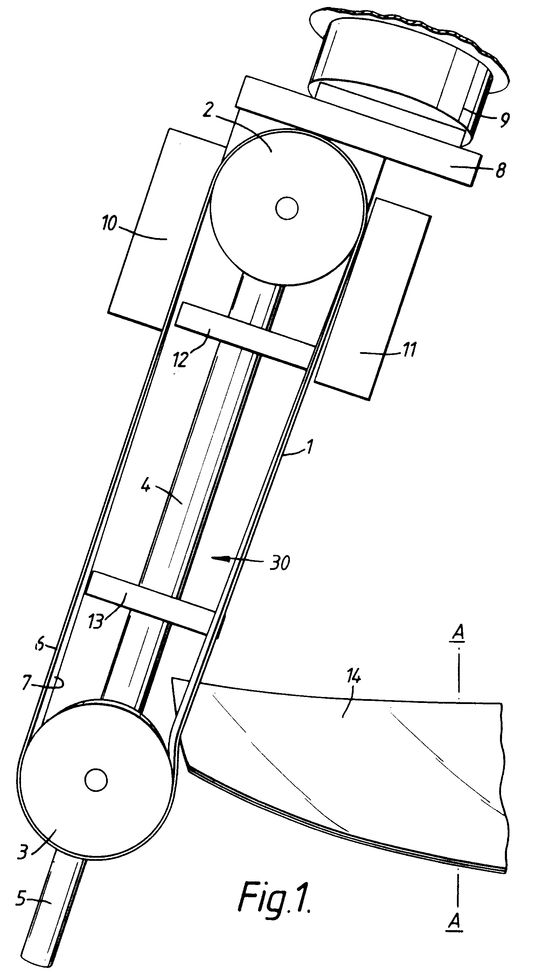

Referring to Fig. 1, a method of removing excess plastic interlayer by abrasion will be described. There is provided an abrading tool comprising an endless abrasive belt 1 running on pulleys 2,3 which are rotatably mounted on a telescopic connecting member generally designated 30 having parts 4 and 5. This member may be extended in order to tension the belt 1 by moving part 5 axially relatively to part 4 as will be explained below. The belt 1 comprises abrasive particles which may be of silica or alumina in a fibrous matrix 6 on a backing material 7 which may be woven. It is preferred that a belt is used of sufficiently mild abrasive properties to abrade the relatively soft interlayer material without noticeably damaging relatively hard adjacent plies. A preferred abrasive belt is Scotchbrite™ SCLS Grade SF (Superfine) supplied by 3M UK plc of Bracknell, Berkshire. England.

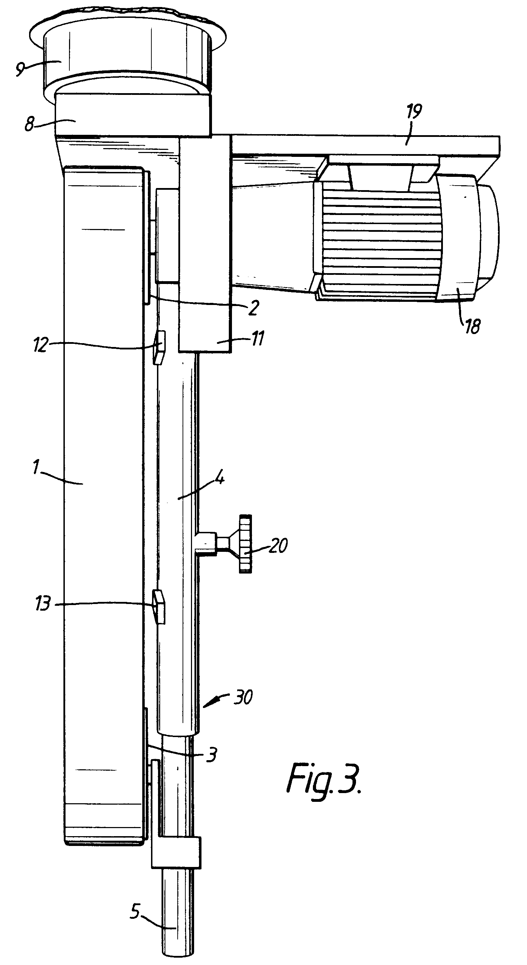

The telescopic member 30 is mounted on mounting plate 8 provided as means of attaching the abrading tool to a motive member, preferably a robot, of which a rotatable head 9 is shown. Brackets 10, 11, 12 and 13 are provided for the mounting of a safety guard housing 21 (shown in Fig. 3).

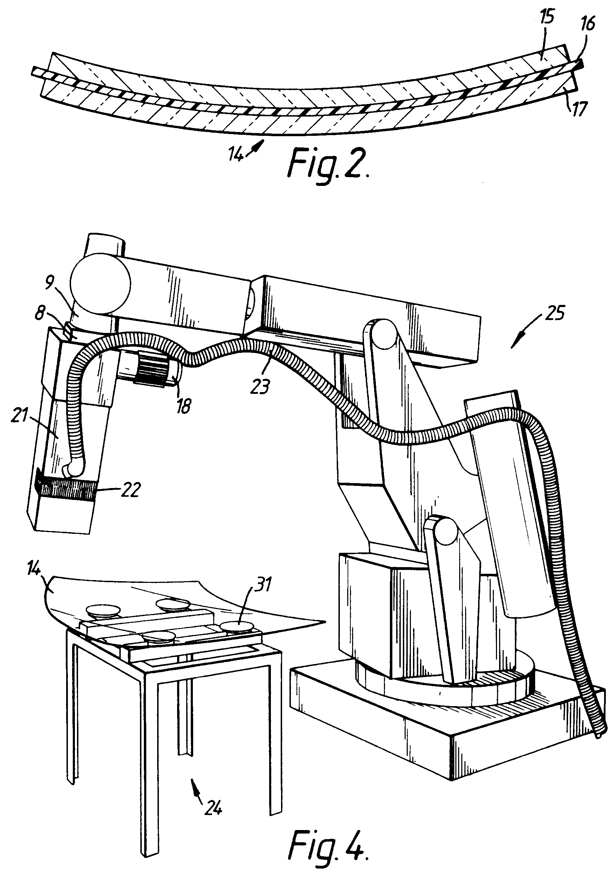

The abrasive belt 1 is shown in contact with the periphery of a laminated window 14, which may be an automotive windscreen, in a manner in which the invention may be used. As shown in Fig. 2, the window 14 may consist of outer glass plies 15 and 17, between which an inner ply of plastics interlayer material 16 is incorporated.

Referring to Fig. 3, the width of belt 1 is chosen to give adequate contact area to the edge of the laminated window to ensure a sufficient rate of removal of excess interlayer material. To increase the contact area, the belt may be inclined so that its longitudinal direction is no longer at right angles but at an acute to the edge of the window it is to follow. A preferred belt has a width of 100mm. The length of the belt affects its useful service life and a preferred belt has a length of 2m.

Pulley 2 is a drive pulley, driven by means of an electric motor 18 mounted on a plate 19 attached to the main mounting plate 8, whereas pulley 3 is a follower pulley. As referred to above, the belt may be tensioned by movement of telescopic part 5 axially relative to part 4. This is achieved by slackening knurled clamping wheel 20 and re-tightening when the parts 4 and 5 of the telescopic member are in the desired relative position, thereby causing the pulleys 2 and 3 to adopt corresponding relative positions.

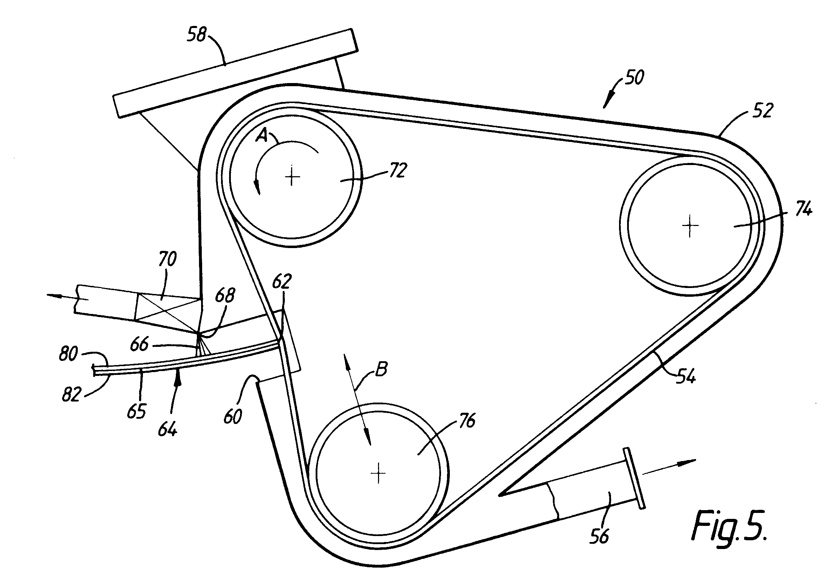

Fig. 4 shows the abrasive belt of Figs. 1 and 3 mounted by means of plate 8 on a robot 25 for movement around the periphery of a laminated window 14 secured by mounting means constituted by table 24. The abrasive belt is not visible owing to the presence of a safety guard housing 21 enclosing the belt, which is shown in a raised position away from the window 14 for clarity.

The housing 21 has an opening 22 by means of which the abrasive belt is brought into contact with the periphery of the window 14, and said opening 22 is fitted with opposing brushes to prevent finely particulate abraded interlayer material being dispersed over the window 14 and surrounding area. Such finely particulate material is removed from the interior of the housing 21 by a dust extraction system (not shown) connected by means of a hose 23. In this context it is noted that the brushes covering the opening 22 fulfil a further function of reducing the area through which air may pass into the housing 21 and thereby increasing the efficiency of extraction.

The window 14 to be worked on is accessibly supported by table 24 which has suction cups 31, well known to those skilled in the art, which hold the window immobile for working on and then release it afterwards. As is also well known, the use of an electronically programmable motive member (robot), generally designated as 25, permits automation of processes such as the traversing of the periphery of the window 14. The robot used in one embodiment was manufactured by Asea Brown Boveri (ABB) Robotics Ltd. of Luton and Milton Keynes, England, and was of a model type designated IRB-90, but other robots may also be suitable. The robot may, if desired, be mounted upside down above the workpiece in a hanging manner, (rather than as shown in Fig. 4), to increase the working envelope i.e. that area within the locus of furthest points which the robot is able to reach.

Description is now made of how to produce a lamianted window by a method in accordance with the invention using the apparatus referred to above to remove excess interlayer.

A laminated window which may, for example be a window, especially a windscreen, for a motor vehicle, is first prepared by sandwiching an initially oversize polyvinylbutyral interlayer between two adjacent glass plies and pressing to provide a preassembly which is then autoclaved, all in known manner. If desired, a proportion of the initial excess of interlayer may be removed from around the edge of the preassembly, usually by cutting with a knife, prior to autoclaving, but it is important to retain significant excess for the autoclaving stage to allow for shrinkage which occurs on autoclaving. The laminate thus produced is then mounted in fixed position on table 24 using suction cups 31.

As explained earlier, substantial contact area between the abrasive belt 1 and the periphery of the window 14 is desirable to obtain a high rate of working. For similar reasons an appropriate speed of travel of the belt 1 is desirable, for example between 3 and 80 metres per second (approximately 200-5000 metres per minute), and preferably between 20 and 50 metres per second (approximately 1000-3000 metres per minute).

In operation, the moving abrasive belt 1 is positioned so as to be in contact with the window 14, which, in the embodiment illustrated, requires that the edge to be abraded of the window 14 is inserted between the opposing brushes covering the opening 22 in the housing 21 until the belt 1 is reached. Preferably, the position of opening 22 relative to the pulleys 2 and 3 is such that the periphery of the window 14 contacts the belt 1 at a point along the belt's length at which the belt 1 is not in contact with either of the pulleys 2 and 3 so that the abrasive belt is unsupported in the region thereof which contacts the plastics material to be abraded thereby facilitating the conformation of the belt to the periphery of the window. The belt 1 should bear upon the periphery of the window 14 with sufficient pressure to cause abrasion of the interlayer material to take, place, but not so high a pressure as to cause significant damage to either the window 14 or the belt 1. A suitable working pressure is found to be between 7000 and 140,000 newtons per square metre (approximately 1-20 pounds per square inch), and is preferably between 20,000 and 70,000 newtons per square metre (approximately 3-10 pounds per square inch). Due to the compliance of the belt, this pressure causes a deflection of the belt from its unloaded condition of the order of 10mm, preferably between 5 and 20 mm.

Preferably, the belt 1 is positioned with its abrading face at right angles to the plane of the window 14 at the window edge where the belt contacts the glass. Optionally, the longitudinal axis of the belt is tilted at an acute angle to the edge it is to follow.

Fig. 5 shows an abrading tool 50 in accordance with a second embodiment of the present invention and which is a modificatin of the abrading tool shown in Figure 1. The abrading tool 50 comprises a casing 52 in which an abrasive belt 54 is mounted. The casing 52 has a cover (not shown). When the cover is assembled on the casing 52, the casing 52 defines a dust confining enclosure of the abrading tool 50. The casing 52 is provided with an extraction duct 56 which, in use, is connected to a source of suction thereby to enable dust which is generated in the abrading process to be extracted out of the abrading tool 50 from the closed casing 52. The casing 52 is also provided with a mounting flange 58 by means of the which the abrading tool 50 is mounted on the robot 25 shown in Figure 4. The casing 52 has a slot 60 constituting an opening for receiving the preipheral edge 62 of a laminated window 64 from which surplus interlayer material 65 is to be removed by the abrading action of the rotating abrading belt 54. A soft brush member 66 extends along the upper edge 68 of the slot 60 and, in use, engages the upper surface of the laminated window 64 which is being processed. A second extraction duct 70 is located at the upper edge 68 of the slot 60 and is also, in use, connected to a source of suction (not shown). In the abrading process, the brush member 66 and the second extraction duct 70 cooperate to remove dust produced in the abrading process in the vicinity of the slot 60 and prevent dust from being deposited on the upper surface of the window 64. Thus after the abrading process, the window 64 is substantially free of dust.

The abrasive belt 54 is the same as that employed in the first embodiment. In this embodiment, the abrasive belt is mounted around three rollers 72,74,76 which are located in a substantially triangular orientation within the casing 52. Roller 72 is rotated in the direction shown by the arrow A by a motor (not shown) so that the abrasive belt 54 is rotated at a desired velocity in an anticlockwise direction as shown in Figure 5. Roller 74 is free-rolling and is fixed in position whereas roller 76 is mounted for sliding lateral movement in a direction shown by the arrows B-B. Roller 76 is connected to the casing 54 by means of an adjustable pneumatic tensioner (not shown). The tensioner can be adjusted under pnuematic control so as to vary the lateral position of the roller 76 along the direction B-B thereby to vary the tension in the abrasive belt 54 to a desired value.

The rollers 72 and 76 are located on opposed sides of the slot 60 so that the slot 60 is substantially centrally located between the rollers 72,76. The peripheral edge 62 of the laminated window 64 thus contacts the abrasive belt 54 at a point along the belt's length at which the belt 54 is not in contact with either of the rollers 72,76 so that the abrasive belt 54 is unsupported in the region thereof which contacts the plastics material to be abraded thereby facilitating the conformation of the belt 54 to the peripheral edge 62 of the window 64. As in the first embodiment, such a juxta-position of the peripheral edge 62 and the unsupported region of the belt 54 permits the belt 54 to abrade against the peripheral edge 62 under a selected working pressure which causes a deflection of the belt 54 from its unloaded condition. This assists in ensuring that the belt 54 conforms to the shape of the peripheral edge 62 of the window 64. In addition, it will be noted that as in the first embodiment of the abrading tool of the invention, the abrading tool 50 is adapted to rotate the abrasive belt 54 across the peripheral edge 62 of the window 64 in a direction from one transparent ply of the window to the other transparent ply of the window (i.e. from upper ply 80 to lower ply 82 as shown in Figure 5). It has been found that the combination of this movement of the abrasive surface transversely across the peripheral edge and the permitting of the unsupported abrasive belt to deflect so as to conform to the shape of the peripheral edge ensures reliable removal of the interlayer without causing any abrasive damage to the transparent plies of the window 64.

The robot is used to propel the abrading tool as a whole around the periphery of the window. The robot may be electronically programmed to position the tool so as to bring the abrading belt into contact with the periphery of the window, to traverse as many edges of the window as is required in whatever order is considered expedient, and then it withdraws the tool so that the trimmed window may be removed from the table and replaced by a further window requiring trimming.

Advantageously, a further aspect of the invention provides for the robot to be programmed so as to cause the abrading tool to turn corners of the window in a manner which avoids damage to the glazing material as well as excessive wear of the belt. This is particularly applicable for turning sharp corners, which typically have a radius of less than about 20mm. When the corners have a greater radius than about 20mm the abrading tool can continuously pass around the corner of the window without excessive abrasion of the corner of the window or consequential potential wear of a corresponding portion of the belt which contacts the corner, and the belt is sufficiently flexible in the transverse direction to enable the belt substantially to assume the shape of the corner in transverse section.

According to this aspect of the invention, as the tool approaches a sharp corner of the window along an edge, it continues to follow a direction corresponding to that edge until the belt is no longer in contact with the window. Only then is the tool repositioned so that the belt is aligned with a direction corresponding to the next edge to be traversed. This direction is effectively the imaginary extension of said next edge, so that when the traverse commences, the belt moves into contact at the corner with the next edge of the window to be abraded, and continues along that edge so that the full width of the belt smoothly passes into contact with said edge. In this way, the extended duration of time for which a relatively small area of belt would be in contact with the corner of the window is avoided. Such extended contact would occur if the abrading tool simply followed the periphery of the window around said corner, turning about an axis through said corner; and may lead to excessive contact pressure between the belt and said corner, possibly causing damage to both.

Where, in any of the embodiments of the invention described, movement of an abrading tool relative to a window is referred to, it is to be understood that this is a reference to relative movement, and the invention may also be worked by moving a laminated window relative to an abrading tool.

The embodiments of the present invention offer several advantages over the prior art. The possibility of damage to the glazing material by cutting blades is eliminated, and as the useful service life of an abrasive belt is considerably longer than that of a cutting blade, loss of production time while changing such items is reduced. Furthermore, owing to the compliance of the abrasive belt, small errors in the path of traverse of the tool, or small irregularities in the periphery of the window, may be accommodated within the deflection of the belt. This feature of the invention may be advantageously exploited for it renders the process more tolerant of such shortcomings in the path of traverse of the tool or the periphery of the window. Embodiments of the invention incorporating the further aspect of causing the abrading tool to turn corners of the window without excessive pressure over a small contact area will further lengthen the service life of the abrasive means.

## Claims

1. A method of producing a laminated window (14) including the step of incorporating an interlayer (16) of a plastics material between two adjacent transparent plies (15,17) whereby the interlayer is oversize so that the interlayer (16) of plastics material extends beyond the edges of the adjacent plies (15,17) and the excess of such plastics material (16) extending beyond the adjacent plies (15,17) is removed by an abrasive belt (1) of an abrading tool, the abrasive belt (1) being rotated across the edge of the window (14) in a direction from one transparent ply (15) to the other transparent ply (17), the abrasive belt (1) being unsupported in the region thereof which contacts the plastics material (16) to be abraded thereby facilitating the conformation of the belt (1) to the periphery of the window (14), and the abrasive belt (1) bearing against the peripheral edge of the window (14) under an applied load so as to cause deflection of the belt (1) in the said region.

2. A method according to claim 1 wherein the abrading tool (1) is moved along the peripheral edge of the window (14).

3. A method according to claim 2 wherein the abrading tool (1) is moved by a robot (25).

4. A method according to claim 2 or claim 3 wherein at at least one selected corner of the window (14) the abrading tool (1) is traversed along one edge of the window (14) and past the corner so as to be out of contact with the window (14) and then the abrading tool (1) is positioned so as to be aligned with the adjacent edge to be traversed.

5. A method according to any foregoing claim wherein the abrading tool (1) is maintained at a constant working pressure against the window edge.

6. Apparatus for removing plastics interlayer material (16) from the peripheral edge of a laminated window (14), the apparatus comprising a mounting means (24) for mounting the window (14) and a tool (1) for removing the plastics material, the tool (1) comprising an abrasive belt (1) and the apparatus further comprising a robot (25) programmed to move the abrading tool (1) and mounting means (24) relative to each other whereby in use the abrasive belt (1) engages excess interlayer material (16) around the peripheral edge of the window (14), the abrading tool (1) being adapted to rotate the abrasive belt (1) across the edge of the window (14) in a direction from one transparent ply (15) to the other transparent ply (17), the abrasive belt (1) being unsupported in the region thereof which, in use, contacts the plastics material (16) to be abraded thereby facilitating the conformation of the belt (1) to the periphery of the window (14) and the abrading tool (1) being adapted, in use, to bear the abrasive belt (1) against the peripheral edge of the window (14) under an applied load so as to cause deflection of the belt (1) in the said region.

7. Apparatus according to claim 6 wherein the robot (25) is adapted to move the abrading tool (1) along the peripheral edge of the window (14).

8. Apparatus according to claim 7 wherein the mounting means (24) is adapted to mount the window (14) in fixed position, with the abrading tool (1) mounted on the robot (25) for movement around the periphery of the window (14).

9. Apparatus according to claim 7 or claim 8 wherein at at least one selected corner of the window (14) the robot (25) is adapted to traverse the abrading tool (1) along one edge of the window (14) and past the corner so as to be out of contact with the window (14) and then to position the abrading tool (1) so as to be aligned with the adjacent edge to be traversed.

10. Apparatus according to any one of claims 6 to 9 wherein the robot (25) is provided with means for maintaining a constant working pressure between the abrading tool (1) and the window edge.

## Patentansprüche

1. Verfahren zur Herstellung eines Verbundfensters (14), welches den Schritt des Einbringens einer Zwischenschicht (16) aus Kunststoff zwischen zwei benachbarte durchsichtige Schichten (15,17) umfaßt, wobei die Zwischenschicht Übergröße besitzt, so daß die Zwischenschicht (16) aus Kunststoff sich über die Ränder der benachbarten Schichten (15,17) hinaus erstreckt und der Überschuß dieses Kunststoffs (16), der über die benachbarten Schichten (15,17) vorsteht, durch ein Schleifband (1) eines Schleifwerkzeugs entfernt wird, das Schleifband (1) quer zum Rand des Fensters (14) in Richtung von einer durchsichtigen Schicht (15) zur anderen durchsichtigen Schicht (17) in Drehung versetzt wird, das Schleifband (1) in demjenigen Bereich desselben nicht unterstützt wird, welcher den abzuschleifenden Kunststoff (16) berührt, wodurch das Anlegen des Bandes (1) an den Umfang des Fensters (14) erleichtert wird, und wobei das Schleifband (1) gegen den Umfangsrand des Fensters (14) unter einer aufgebrachten Belastung drückt, um ein Abbiegen des Bandes (1) in diesem Bereich zu bewirken.

2. Verfahren nach Anspruch 1, bei welchem das Schleifwerkzeug (1) längs des Umfangsrandes des Fensters (14) bewegt wird.

3. Verfahren nach Anspruch 2, bei welchem das Schleifwerkzeug (1) durch einen Roboter (25) bewegt wird.

4. Verfahren nach Anspruch 2 oder 3, bei welchem an wenigstens einer ausgewählten Ecke des Fensters (14) das Schleifwerkzeug (1) längs eines Randes des Fensters (14) und an der Ecke vorbeigeschoben wird, so daß es außer Berührung mit dem Fenster (14) ist, und sodann das Schleifwerkzeug (1) so angeordnet wird, daß es mit dem benachbarten, zu überstreichenden Rand ausgerichtet ist.

5. Verfahren nach einem der vorangehenden Ansprüche, bei welchem das Schleifwerkzeug (1) mit einem konstanten Arbeitsdruck gegen den Fensterrand gehalten wird.

6. Vorrichtung zum Entfernen von Kunststoff-Zwischenschichtmaterial (16) vom Umfangsrand eines Verbundfensters (14), wobei die Vorrichtung eine Halteeinrichtung (24) zum Halten des Fensters (14) und ein Werkzeug (1) zum Entfernen des Kunststoffmaterial aufweist, das Werkzeug (1) ein Schleifband (1) aufweist, und die Vorrichtung ferner einen Roboter (25) aufweist, der so programmiert ist, daß er das Schleifband (1) und die Halteeinrichtung (24) relativ zueinander bewegt, wodurch bei Betrieb das Schleifband (1) am überschüssigen Zwischenschichtmaterial (16) rings um den Umfangsrand des Fensters (14) angreift, das Schleifwerkzeug (1) geeignet ist, das Schleifband (1) quer zum Rand des Fensters (14) in einer Richtung von einer durchsichtigen Schicht (15) zu der anderen durchsichtigen Schicht (17) in Drehung zu versetzen, das Schleifband (1) in dem Bereich desselben nicht unterstützt ist, welcher bei Betrieb das abzuschleifende Kunststoffmaterial (16) berührt, wodurch die Anlage des Bandes (1) am Umfang des Fensters (14) erleichtert wird, und wobei das Schleifwerkzeug (1) geeignet ist, bei Betrieb das Schleifband (1) unter einer aufgegebenen Belastung gegen den Umfangsrand des Fensters (14) zu drücken, um eine Abbiegung des Bandes (1) in diesem Bereich zu bewirken.

7. Vorrichtung nach Anspruch 6, bei welcher der Roboter (25) geeignet ist, das Schleifwerkzeug (1) längs des Umfangsrandes des Fensters (14) zu bewegen.

8. Vorrichtung nach Anspruch 7, bei welcher die Halteeinrichtung (24) geeignet ist, das Fenster (14) in einer festen Lage zu halten, wobei das Schleifwerkzeug (1) im Roboter (25) zur Ausführung einer Bewegung rings um den Umfang des Fensters (14) gelagert ist.

9. Vorrichtung nach Anspruch 7 oder 8, bei welcher an wenigstens einer ausgewählten Ecke des Fensters (14) der Roboter (25) in der Lage ist, das Schleifwerkzeug (1) längs eines Randes des Fensters (14) und an der Ecke vorbei so zu führen, daß es außer Berührung mit dem Fenster (14) kommt, und sodann das Schleifwerkzeug (1) so anzuordnen, daß es mit dem angrenzenden Rand, über den es geführt werden soll, ausgerichtet ist.

10. Vorrichtung nach einem der Ansprüche 6 bis 9, bei welcher der Roboter (25) mit einer Einrichtung zur Aufrechterhaltung eines konstanten Arbeitsdrucks zwischen dem Schleifwerkzeug (1) und dem Fensterrand ausgestattet ist.

## Revendications

1. Procédé de fabrication d'un vitrage laminé (14) comprenant la phase consistant à incorporer une couche intermédiaire (16) de matière plastique entre deux couches transparentes adjacentes (15, 17) de manière que la couche intermédiaire soit surdimensionnée afin que la couche intermédiaire (16) de matière plastique s'étende au-delà des bords des couches adjacentes (15, 17) et l'excès de cette matière plastique (16) s'étendant au-delà des couches adjacentes (15, 17) soit enlevé par une bande abrasive (1) d'un outil à abraser, la bande abrasive (1) étant entraînée en rotation en travers du bord du vitrage (14) dans une direction allant d'une couche transparente (15) à l'autre couche transparente (17), la bande abrasive (1) n'étant pas supportée dans sa région qui contacte la matière plastique (16) à abraser de manière à faciliter la correspondance de la bande (1) avec la périphérie du vitrage (14), et la bande abrasive (1) portant contre le bord périphérique du vitrage (14) sous une charge appliquée de manière à provoquer un fléchissement de la bande (1) dans ladite région.

2. Procédé selon la revendication 1, dans lequel l'outil à abraser (1) est déplacé le long du bord périphérique du vitrage (14).

3. Procédé selon la revendication 2, dans lequel l'outil à abraser (1) est déplacé par un robot (25).

4. Procédé selon la revendication 2 ou la revendication 3, dans lequel en au moins un coin sélectionné du vitrage (14) l'outil à abraser (1) est déplacé le long d'un bord du vitrage (14) et au-delà du coin afin d'être hors de contact avec le vitrage (14) puis l'outil à abraser (1) est positionné de manière à être aligné avec le bord adjacent le long duquel il doit être déplacé.

5. Procédé selon l'une quelconque des revendications précédentes, dans lequel l'outil à abraser (1) est maintenu à une pression de régime constante contre le bord du vitrage.

6. Appareil pour enlever la matière plastique de la couche intermédiaire (16) du bord périphérique d'un vitrage laminé (14), l'appareil comprenant un moyen de montage (24) pour monter le vitrage (14) et un outil (1) pour enlever la matière plastique, l'outil (1) comprenant une bande abrasive (1) et l'appareil comprenant en outre un robot (25) programmé pour déplacer l'outil à abraser (1) et le moyen de montage (24) l'un par rapport à l'autre de manière que, à l'utilisation, la bande abrasive (1) engage la matière plastique en excès de la couche intermédiaire (16) autour du bord périphérique du vitrage (14), l'outil à abraser (1) étant adapté à faire tourner la bande abrasive (1) en travers du bord du vitrage (14) dans une direction allant d'une couche transparente (15) à l'autre couche transparente (17), la bande abrasive (1) n'étant pas supportée dans sa région qui, à l'utilisation, contacte la matière plastique (16) à abraser de manière à faciliter la correspondance de la bande (1) avec la périphérie du vitrage (14) et l'outil à abraser (1) étant adapté, à l'utilisation, à faire porter la bande abrasive (1) contre le bord périphérique du vitrage (14) sous une charge appliquée de manière à provoquer un fléchissement de la bande (1) dans ladite région.

7. Appareil selon la revendication 6, dans lequel le robot (25) est adapté à déplacer l'outil à abraser (1) le long du bord périphérique du vitrage (14).

8. Appareil selon la revendication 7, dans lequel le moyen de montage (24) est adapté à monter le vitrage (14) dans une position fixe, avec l'outil à abraser (1) monté sur le robot (25) pour un déplacement autour de la périphérie du vitrage (14).

9. Appareil selon la revendication 7 ou la revendication 8, dans lequel en au moins un coin sélectionné du vitrage (14) le robot (25) est adapté à déplacer l'outil à abraser (1) le long d'un bord du vitrage (14) et au-delà du coin afin que l'outil soit hors de contact avec le vitrage (14) puis à positionner l'outil à abraser (1) de manière à l'aligner avec le bord adjacent le long duquel il doit être déplacé.

10. Appareil selon l'une quelconque des revendications 6 à 9, dans lequel le robot (25) est doté d'un moyen pour maintenir une pression de régime constante entre l'outil à abraser (1) et le bord du vitrage.
